# EUROPÄISCHE PATENTSCHRIFT

(11) **EP 2 895 373 B1**
(45) Veröffentlichungstag und Bekanntmachung des Hinweises auf die Patenterteilung: **23.11.2016**
(21) Anmeldenummer: 13774601.2
(22) Anmeldetag: 12.09.2013
(51) Int. Cl.: B62B 3/00, B62B 5/00, B62B 7/04, B62B 9/00, B62D 5/04

(54) **HANDGEFÜHRTES FAHRZEUG UND NACHRÜSTSATZ ZUM UMRÜSTEN EINES DERARTIGEN FAHRZEUGS**
HAND CART AND RETROFIT KIT FOR RETROFITTING SUCH A HAND CART
CHARIOT ET KIT DE CONVERSION D'UN TEL CHARIOT

(30) Priorität: 12.09.2012 DE 102012017977
(43) Veröffentlichungstag der Anmeldung: 22.07.2015
(73) Patentinhaber: Herzog-Lang, Viktor, 75210 Keltern (DE)
(72) Erfinder: Herzog-Lang, Viktor, 75210 Keltern (DE)
(74) Vertreter: Reinhardt, Harry
(86) Internationale Anmeldenummer: PCT/EP2013/002735
(87) Internationale Veröffentlichungsnummer: WO 2014/040731

(56) Entgegenhaltungen:
- DE-A1-102006 041 897
- DE-A1-102007 043 487
- DE-A1-102010 040 742
- DE-U1-202009 016 279
- DE-U1-202012 100 199

## Beschreibung

Die Erfindung betrifft ein handgeführtes Fahrzeug wie einen Kinderbuggy oder einen Kinderwagen mit den Merkmalen des Oberbegriffs des Anspruches 1 sowie einen Nachrüstsatz zum Umrüsten eines handgeführten Fahrzeugs mit den Merkmalen des Anspruches 11.

Aus der dem Oberbegriff des Anspruches 1 zugrundeliegenden DE 20 2009 016 279 U1 ist ein handgeführtes Fahrzeug in Form eines Golftaschenwagens bekannt, der mit einer Leistungsvorderradeinheit ausgestattet ist. Motoren sind zum Antrieb und zum motorischen Lenken des Vorderrads des dreirädrigen Fahrzeugs vorgesehen. Die Lenkung wird von dem am Chassis angebrachten Motor über ein Zahnradgetriebe betätigt.

Aus der DE 10 2006 023 577 A1 ist ein Radnabenantrieb für Flurförderzeuge bekannt, bei dem die motorischen Lenk- und Antriebskräfte über Planetengetriebe übertragen werden.

Einen üblichen Aufbau für eine Lenkantriebsordnung für ein Flurförderzeug zeigt die DE 10 2010 040 742 A1. Der Rotor eines Elektromotors ist der Lenkung zugeordnet, der Stator dem Lenkgehäuse. Dies erfordert Schleifkontakte oder verdrillbare Kabel zur Energieübertragung.

Aus der DE 20 2012 100 199 U1 ist es bekannt, ein handgeführtes Fahrzeug wie insbesondere einen Kinderwagen mit einem Nabenmotor an wenigstens einem antreibbaren Rad auszustatten. Es handelt sich um ein dreirädriges Fahrzeug, bei dem das Vorderrad entsprechend angetrieben wird. Ziel ist es, das Fahrzeug handgeführt zu betreiben und dennoch motorisch anzutreiben, um über größere Strecken wie bei Wanderungen eine Erleichterung beim Schieben desselben durch Eigenantrieb zu ermöglichen. Der Nabenmotor wird über einen Energiespeicher betrieben, der am hinteren Ende des Fahrzeuges untergebracht ist. (s.a. DE 20 2010 009 628 U1, 20 2010 000 595 U1)

In der DE 10 2007 004 704 A1 wird ein Kinderwagen mit mindestens drei Laufrädern vorgeschlagen, der eine Antriebseinheit bestehend aus einem Elektromotor mit elektrischem Energiespeicher umfasst. Diese Antriebseinheit kann ohne Werkzeug vom Grundgestellt abgenommen und wieder angebracht werden. Der Antrieb erfolgt über ein zusätzliches Laufrad, das zum Antrieb auf die Fahrbahn abgesenkt wird.

Ein Hilfsantrieb, der über ein Getriebe innenseitig an einem Laufrad des Kinderwagens ansetzt, ist aus der DE 37 33 698 A1 bekannt.

Aus der EP 662 012 B1 ist eine fahrbare Vorrichtung mit einem elektrischen Hilfsantrieb bekannt, der in Abhängigkeit der Muskelkraft des Bedieners eine Antriebskraft bzw. einen Bremsmoment erzeugt, so dass das Fahrzeug mit gleichmäßiger Kraft bewegt werden kann. Als Motor kann dabei ein getriebelos in das Rad integrierter Motor, wie z.B. ein Nabenmotor verwendet werden.

Grundsätzlich ist aus dem Stand der Technik ebenfalls bekannt, an Kinderwägen lenkbare Räder vorzusehen, was z.B. nach der DE 340 738 über ein Lenkgestänge erfolgen kann (vergleiche auch DE 1 699 475 U).

Zum Lenken Signale zu verwenden, die bei Betätigung eines Griffs eines Fahrzeuges ausgewertet werden, ist aus der DE 10 2004 020 282 A1 bekannt, die sich mit der Ansteuerung und Verwendung von Einkaufswägen beschäftigt. Gemäß Fig. 224 erfolgt die Lenkung über die Griffstange, wobei gemäß den Absätzen (0705) bis (0707) und (0810) bis (0812) im Griff Spulen vorgesehen sind, so dass ein demgegenüber bewegliches Griffelement induktiv Spannungsänderungen hervorruft, die erfasst werden, um dadurch Lenksignale zu ermitteln.

Ausgehend von diesem Stand der Technik liegt der vorliegenden Erfindung die Aufgabe zugrunde, ein handgeführtes Fahrzeug mit einem kompakten lenkbaren Antrieb zu schaffen, der leicht austauschbar und nachrüstbar ist. Dies gilt entsprechend für einen Nachrüstsatz.

Diese Aufgabe wird durch ein handgeführtes Fahrzeug mit den Merkmalen des Anspruches 1 sowie durch einen Nachrüstsatz mit den Merkmalen des Anspruches 11 gelöst.

Das antreibbare Rad weist neben einem Nabenmotor einen Lenkmotor auf, der das antreibbare Rad vorzugsweise um eine vertikale Achse zur Lenkung dreht. Um den kompakten Aufbau nachhaltig umzusetzen, werden dabei Rotor und Stator im Lenkmotor quasi vertauscht, so dass die baulichen Eigenschaften dafür geschaffen werden, die Energiezufuhr für die Einheit von Lenk- und Antriebsmotor kabel- und kontaktfrei auf dem sich zum Lenken drehenden Stator des Lenkmotors positionieren zu können, während der Rotor des Lenkmotors fest mit dem Gehäuse des Chassis verbunden ist. Eine Getriebeüber- oder -untersetzung ist nicht erforderlich.

Vorzugsweise greift an der vertikalen Achse auch der Lenkmotor an, so dass bei einem Elektromotor die Mittelachse von Stator und Rotor des Lenkmotors mit der vertikalen Achse zusammenfällt. Dadurch ergibt sich ein sehr kompakter Aufbau der Lenk- und Antriebseinheit.

Dieser kompakten Einheit ist vorzugsweise auch der Energiespeicher zugeordnet, so dass bedarfsweise die gesamte Einheit bestehend aus Nabenmotor für den Antrieb des Rades und Lenkmotor zum Lenken des Rades gemeinsam mit dem Energiespeicher vom Fahrzeug abgenommen und durch ein nicht angetriebenes Rad ausgetauscht werden kann oder umgekehrt eine entsprechende Nachrüstung ohne weiteres möglich ist. Die Motoren sind vorzugsweise baugleich bzw. identisch, um dadurch eine erhöhte Modularität zu erreichen und die Kosten bei der Herstellung gering zu halten.

Weitere Vorteile ergeben sich aus den Unteransprüchen und der nachfolgenden Beschreibung eines bevorzugten Ausführungsbeispiels.

Im Folgenden wird die Erfindung anhand eines in den Figuren dargestellten Ausführungsbeispiels näher erläutert. Es zeigen:
- Fig. 1: eine perspektivische Ansicht eines dreirädrigen handgeführten Fahrzeuges, das als Gestell für einen Kinderwagen dienen kann,
- Fig. 2: einen vergrößerten Ausschnitt aus Fig. 1 im Bereich des angetriebenen Vorderrades, Vorderrades,
- Fig. 3: einen Schnitt durch das Vorderrad und seine Aufhängung am Vorderteil des Fahrzeuges,
- Fig. 4,5: vergrößerte, teilweise geschnittene dreidimensionale Ansichten des Griffs des Fahrzeuges.

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht. Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen.

Die Figuren zeigen ein handgeführtes Fahrzeug, wie es z.B. als Kinderbuggy oder Kinderwagen verwendet werden kann, denkbar sind jedoch auch Kindertransporter, Joggingtrailer oder andere handgeführte Fahrzeuge, die ausgehend von einem Grundfahrzeug durch Abwandlung und Austausch von Teilen für unterschiedliche Einsatzzwecke umrüstbar sind. Gerade für den Einsatz in ansteigendem oder steilem Gelände ist eine Nachrüstung mit einem umweltfreundlichen und weitgehend wartungsfreien Elektroantrieb zur Unterstützung der Körperkräfte von Vorteil, wie er durch einen Antrieb mit einem Nabenmotor 13 zur Verfügung gestellt werden kann.

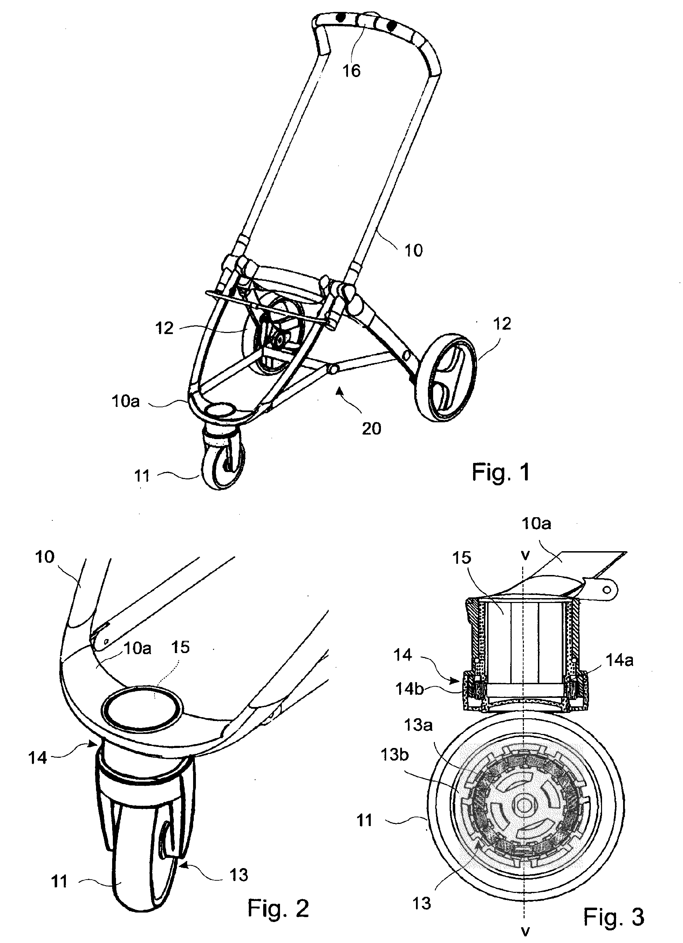

In dem in Fig. 1 dargestellten Chassis 10 kann eine übliche Sitzschale oder Baby-Liegeschale angeordnet werden, ebenso ist jedoch auch ein Lastentransport mit einem derartigen Fahrzeug möglich. Das elektromotorisch angetriebene Fahrzeug kann auch zur Beförderung behinderter oder verletzter Personen eingesetzt werden. Das Fahrzeug weist im Ausführungsbeispiel einen Klappmechanismus 20 zum Zusammenklappen des Fahrzeugs auf.

Das Fahrzeug weist am Chassis 10 wenigstens drei Räder auf, von denen wenigstens ein Rad 11 mittels eines Nabenmotors 13 antreibbar ist. Das antreibbare Rad 11 ist im vorliegenden Fall das Vorderrad eines dreirädrigen Fahrzeuges. Die Hinterräder 12 sind im Ausführungsbeispiel nicht angetrieben, könnten jedoch analog ebenfalls antreibbar ausgebildet werden. Die Verwendung von Nabenmotoren zum Antrieb ist seit langem zum Beispiel aus der EP 662 012 B1 bekannt.

Ergänzend zum Antrieb des Fahrzeuges durch den Nabenmotor ist ein Lenkmotor 14 vorgesehen, der das antreibbare Rad 11 um eine im Wesentlichen vertikale Achse v-v (Fig. 3) dreht, die am Chassis 10 und genauer am Vorderteil 10a des Fahrzeuges vorgesehen ist.

Auf aus dem Stand der Technik bekannte Art und Weise erfolgt die Ansteuerung des Antriebs so, dass sich eine elektromotorische Unterstützung des Fahrzeugführers ergibt. Bei einem Kinderwagen wird dabei von einem Schieben auf der Ebene bei Windstille ausgegangen. Das Schieben des Kinderwagens wird bei Gegenwind, Steigungen und Unebenheiten des Untergrundes progressiv motorisch unterstützt. Bergab wird das Fahrzeug energierückgewinnend gebremst. Die Landschaft wird dadurch nivelliert und es ergibt sich ein angenehm leichtes Schieben.

Der Lenkmotor 14 ist wie der Nabenmotor 13 als elektromotorischer Antrieb mit Rotor und Stator ausgestattet. Die Mittelachse dieses Lenkmotors 14 fällt vorzugsweise mit der im Wesentlichen vertikalen Achse v-v zusammen, um die die Lenkung des antreibbaren Rades 11 erfolgt.

Für diese Anmeldung wird dabei davon ausgegangen, dass bei einem üblichen Aufbau der Rotor eines Elektromotors drehbeweglich im Innern eines Stators aufgenommen ist, wobei der Stator zur Rotation des Rotors entsprechend bestromt wird. Damit ist der Stator üblicherweise feststehend.

Im Ausführungsbeispiel ist erfindungsgemäß jedoch der Rotor 14b des Lenkmotors 14 gemäß Fig. 3 am Vorderteil 10a des Chassis 10 befestigt, während sich der Stator 14a mit zugehöriger Ansteuerelektronik mit dem antreibbaren Rad 11 gegenüber dem Chassis 10 drehen kann, also am Vorderteil 10a drehbeweglich gelagert ist. Mit anderen Worten werden Rotor und Stator im Lenkmotor quasi vertauscht, so dass die Energiezufuhr für die Einheit von Lenk- und Antriebsmotor kabel- und kontaktfrei auf dem sich zum Lenken drehenden Stator 14a des Lenkmotors 14 positioniert werden können, während der Rotor 14b des Lenkmotors 14 fest mit dem Gehäuse des Chassis verbunden ist.

In Fig. 3 über Stator 14a und Rotor 14b befindet sich ein Energiespeicher 15, der durch wieder aufladbare Akkumulatoren oder Batterien gebildet ist. Alternative Energiespeicherformen sind entsprechend verwendbar. Auch der Energiespeicher 15 für den Nabenmotor 13 und den Lenkmotor 14 ist mit dem antreibbaren Rad 11 gegenüber dem Chassis 10 drehbeweglich gelagert.

Vorzugsweise sind der Nabenmotor 13 und der Lenkmotor 14 im Wesentlichen baugleich, vorzugsweise sogar identisch ausgebildet, wodurch die Modularität erhöht werden kann, was die Herstellungskosten beim Hersteller verringert.

Das antreibbare Rad 11 kann, wie aus Fig. 2 und 3 ersichtlich, sehr leicht gegen ein nichtangetriebenes Rad ausgetauscht werden. Letztlich bleibt am Vorderteil 17 die Lagerung für das antreibbare Rad zurück, während das Rad 11 inklusive Nabenmotor 13 und Lenkmotor 14 vom Chassis 10 abgenommen werden kann und durch ein nicht angetriebenes Rad austauschbar ist. Ebenso ist ein nicht angetriebener Kinderwagen auf diese Weise ohne weiteres nachrüstbar. Vorzugsweise wird jedoch das gesamte Vorderteil 10a, in dem bei einer antreibbaren Lösung sowohl Rotor 14b als auch Stator 14a des Lenkmotors 14 gelagert sind, durch ein Vorderteil 10a mit nicht angetriebenen Rad ersetzt.

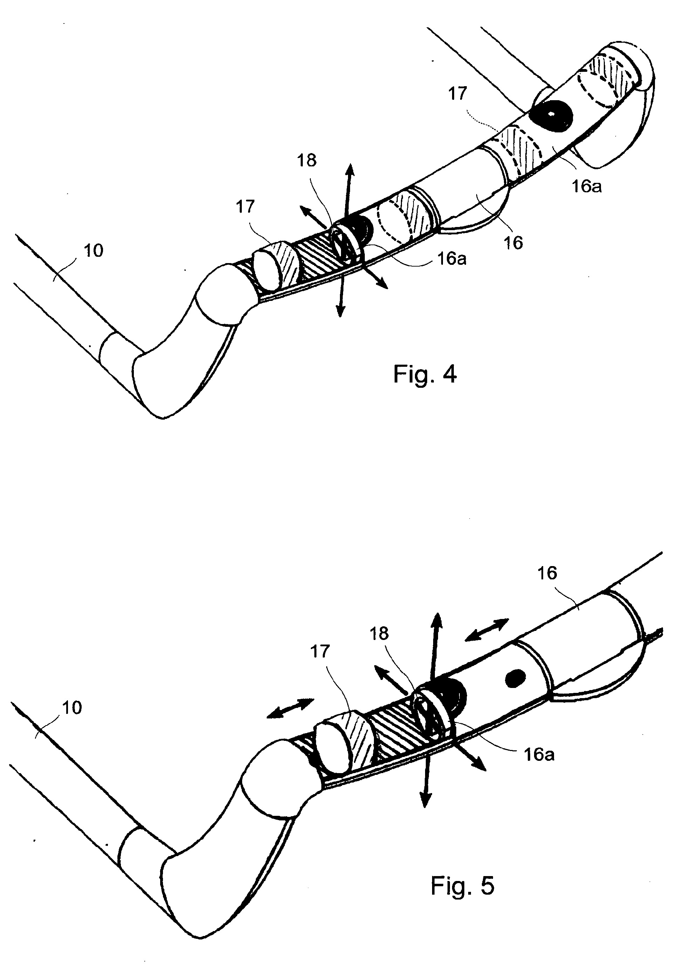

Die Lenkung des angetriebenen Rads 11 bzw. des Vorderrades erfolgt über eine Lenkvorrichtung, wozu die Einwirkung des Fahrzeugführers auf den Griff 16 erfasst wird. Gemäß den Figuren 4 und 5 sind am Griff 16 Griffhülsen 16a vorgesehen, die gegenüber Griffhalterungen 17 relativ verschieblich sind. Diese Relativverschiebung wird induktiv erfasst, wozu im Griff mehrere Spulen 18 angeordnet sind. Bei der Verschiebung ergeben sich damit Spannungsänderungen, die von einer zeichnerisch nicht dargestellten Steuereinrichtung in Stellsignale für die Lenkvorrichtung gewandelt werden. Gemäß den in Fig. 4 und 5 angedeuteten Pfeilen erfasst die Sensorik dabei einerseits Bewegungen quer zur Mittelachse des Griffs als auch in axialer Richtung des Griffs.

Im Ausführungsbeispiel werden also induktiv die Kraftvektoren gemessen, welche in den Griff beim Führen des Fahrzeuges eingegeben werden. Dazu sind die Griffhülsen 16a oder andere entsprechend gelagerte Teile des Griffs um die als Schieberkern ausgebildete Griffhalterung beweglich gelagert. Zunächst weisen die Griffhülsen 16a ein Spiel von 0,5 mm gegenüber den Griffhalterungen 17 auf. Bei diesen Griffhalterungen handelt es sich um innenliegende Ringe aus elektrisch leitendem, nicht magnetischem Material. Vorzugsweise sind diese Ringe in Polyurethan mit einem hohen Rückstellvermögen gelagert, um eine entsprechende Erfassung der beim Führen des Fahrzeugs auftretenden Kräfte auf Dauer zu gewährleisten. Über dieses beim Führen des Fahrzeuges nicht wahrnehmbare Spiel werden zunächst drei Richtungen in der Vertikalen gemessen, also quer zum Griff 16. Gemessen werden kann damit z.B. Zug und Druck entsprechend einem Schieben oder Halten bzw. Bremsen des Fahrzeuges oder auch ein Druck von oben, das zu einem Abheben des wenigstens einen antreibbaren Rads 11 führt, nämlich des Vorderrads, das dadurch angehoben wird, wobei als Folge der Krafterfassung der Antrieb verlangsamt wird. Quer zu dieser Richtung werden für das Lenken die Bewegungen der Griffhülsen 16a horizontal also nach links und rechts gemessen.

Da der Griff 16 symmetrisch aufgebaut ist und links und rechts jeweils eine Griffhülse 16a vorgesehen ist, ist auch ein einhändiges Führen des Fahrzeuges zuverlässig zu erfassen und kann in einen entsprechenden Lenkausschlag des Vorderrades und die erforderliche Traktion umgerechnet werden.

Die Verwendung nur eines antreibbaren Rades an einem dreirädrigen Fahrzeug führt zu einer kompakten Antriebs- und Lenkeinheit, die im Ausführungsbeispiel knapp zwei Kilogramm wiegt. Bei einer dreirädrigen Lösung hat das antreibbare Rad 11 beim Fahren auch um Kurven permanent Bodenkontakt und gewährleistet so eine gleichmäßige Traktion. Lenkmotor 14 und Nabenmotor 13 sind baugleich und haben eine geringe Bauhöhe von 10 bis 12 mm bei einem Außendurchmesser im Ausführungsbeispiel von etwa 80 mm. Es handelt sich um Direktantriebe mit geringer Leistung aber hohem Drehmoment. Sie haben eine Nennleistung von 20 bzw. 50 Watt. Um ein ruckelfreies Lenken zu ermöglichen, sind die Wicklungen des Stators dreifach ausgerichtet.

Im Ausführungsbeispiel wird die gesamte Einheit mit Lenkmotor 14 und Nabenmotor 13 von sieben Lithium-Ionen-Standardzellen im Energiespeicher 15 versorgt. Sie sind damit im Stator 14a des Lenkmotors 14 untergebracht. Der Energiespeicher dreht sich auf der Oberseite des Vorderteils 10a sichtbar beim Lenken mit. Damit und durch die Anordnung des Rotors 14b am Vorderteil 10a sind keine Schleifkontakte für die Stromübertragung erforderlich, so dass die gesamte Einheit sich um 360 Grad drehen kann. Gleichzeitig ist damit problemlos die Stromversorgung des Nabenmotors sichergestellt.

Der Griff 16, dessen Bewegung gegenüber der Griffhalterung 17 für die Lenkung ausgewertet wird, kann über eine dort angebrachte Platine die erfassten Spannungssignale auswerten und an die Lenkvorrichtung übermitteln. Dies kann z.B. dadurch erfolgen, dass die Sensordaten über Kabel in den Schieberrohren an Spulen am Ende der Schieberohre des Chassis 10 überführt werden. Im Führungsrohr des teleskopierbaren Chassis können dazu koaxial angeordnete Spulen vorgesehen werden, um dadurch berührungslos den geringen Datenstrom bis zum Vorderteil 10a zu übermitteln. Dasselbe Prinzip kann dann am Vorderteil beim Übergang vom Vorderteil zu den Motoren erfolgen.

Um Eigenlenkkräfte auszuschließen, ist das als antreibbares Rad 11 ausgebildete Vorderrad senkrecht, d.h. ohne Nachlauf unter dem Lenkmotor 14 angeordnet.

Vorzugsweise kann ein entsprechender Nachrüstsatz zum Umrüsten eines derartigen handgeführten Fahrzeugs wie eines Kinderwagens mit Chassis 10 wie folgt aufgebaut werden:
- Vorderteil 10a,
- antreibbares Rad 11 mit Nabenmotor 13 zum Antrieb des antreibbaren Rades,
- Lenkmotor 14 einer Lenkvorrichtung, der zum Lenken des antreibbaren Rades 11 um eine vertikal Achse v-v angeordnet wird, wobei die Mittelachse von Rotor 14b und Stator 14a des Lenkmotors 14 mit der vertikalen Achse zusammenfällt,
- einer Lagerung zur Lagerung des antreibbaren Rades 11 und des Lenkmotors 14 am Chassis 10,
- einer Steuereinrichtung zur Steuerung der Lenkvorrichtung.

### Bezugszeichenliste

- 10: Chassis
- 10a: Vorderteil
- 11: antreibbares Rad
- 12: Hinterrad
- 13: Nabenmotor
- 13a: Stator
- 13b: Rotor
- 14: Lenkmotor
- 14a: Stator
- 14b: Rotor
- 15: Energiespeicher
- 16: Griff
- 16a: Griffhülse
- 17: Griffhalterung
- 18: Spule
- 20: Klappmechanismus
- v-v: vertikale Achse

## Patentansprüche

1. Handgeführtes Fahrzeug mit einem Chassis (10), an dem wenigstens drei Räder angebracht sind, von denen wenigstens ein Rad (11) mittels eines Nabenmotors (13) antreibbar ist, wobei das wenigstens eine antreibbare Rad (11) mittels einer Lenkvorrichtung mit einem elektrischen Lenkmotor (14) mit Stator (14a) und Rotor (14b) lenkbar ist,
**dadurch gekennzeichnet, dass** der Rotor (14b) des Lenkmotors (14) am Chassis (10) befestigt ist und der mit Wicklungen versehene Stator (14b) mit dem antreibbaren Rad (11) gegenüber dem Chassis (10) drehbeweglich ist.

2. Fahrzeug nach Anspruch 1, **dadurch gekennzeichnet, dass** das wenigstens eine antreibbare Rad (11) um eine im Wesentlichen vertikale Achse (v-v) drehbar am Chassis (10) gelagert ist und das der Lenkmotor (14) an der vertikalen Achse (v-v) angreift.

3. Fahrzeug nach Anspruch 1 oder 2, **dadurch gekennzeichnet, dass** die Mittelachse von Stator (14a) und Rotor (14b) des Lenkmotors (14) mit der vertikalen Achse (v-v) zusammenfällt.

4. Fahrzeug nach einem der vorhergehenden Ansprüche, **dadurch gekennzeichnet, dass** der sich zum Lenken drehende Stator (14a) des Lenkmotors (14) drehbeweglich im Innern des fest mit dem Gehäuse des Chassis (10) verbunden Rotors (14b) aufgenommen ist.

5. Fahrzeug nach einem der vorhergehenden Ansprüche, **dadurch gekennzeichnet, dass** ein Energiespeicher (15) für den Nabenmotor (13) und für den Lenkmotor (14) mit dem antreibbaren Rad (11) gegenüber dem Chassis (10) drehbeweglich ist.

6. Fahrzeug nach einem der vorhergehenden Ansprüche, **dadurch gekennzeichnet, dass** Lenkmotor (14) und Nabenmotor (13) für das antreibbare Rad (11) im Wesentlichen baugleich vorzugsweise identisch sind.

7. Fahrzeug nach einem der vorhergehenden Ansprüche, **dadurch gekennzeichnet, dass** das antreibbare Rad (11) das Vorderrad eines dreirädrigen Kinderwagens ist.

8. Fahrzeug nach einem der vorhergehenden Ansprüche, **dadurch gekennzeichnet, dass** das Fahrzeug einen Griff (16) aufweist, der zur Lenkung der Lenkvorrichtung gegenüber einer Griffhalterung (17) relativ verschieblich ist, wobei die Relativverschiebung induktiv erfasst wird und die so ermittelten Signale in Stellsignale für die Lenkvorrichtung gewandelt werden.

9. Fahrzeug nach einem der vorhergehenden Ansprüche, **dadurch gekennzeichnet, dass** das antreibbare Rad (11) mit Nabenmotor (13) und Lenkmotor (14) vom Chassis (10) abnehmbar und durch ein nicht angetriebenes Rad austauschbar ist.

10. Fahrzeug nach einem der vorhergehenden Ansprüche, **dadurch gekennzeichnet, dass** das Fahrzeug ein Kinderwagen oder Kinderbuggy ist.

11. Nachrüstsatz zum Umrüsten eines handgeführten Fahrzeugs wie eines Kinderwagens mit Chassis (10), der zum Nachrüsten ein Lagerelement zur Befestigung am Chassis aufweist, bestehend aus den Bauteilen:
- antreibbares Rad (11) mit Nabenmotor (13),
- Lenkmotor (14) einer Lenkvorrichtung zum Lenken des antreibbaren Rades, wobei der Lenkmotor (14) Stator (14a) und Rotor (14b) aufweist und wobei die Mittelachse des Lenkmotors mit der vertikalen Achse (v-v) zusammenfällt, um die das antreibbare Rad lenkbar ist,
- dem Lagerelement zur Lagerung des antreibbaren Rades (11) und des Lenkmotors (14),
- wobei der Rotor (14b) des Lenkmotors (14) am Lagerelement befestigt ist und der mit Wicklungen versehene Stator (14b) mit dem antreibbaren Rad (11) gegenüber dem Lagerelement drehbeweglich ist.
- Steuereinrichtung zur Steuerung der Lenkvorrichtung.

## Claims

1. A hand-guided vehicle having a chassis (10) on which at least three wheels are mounted, of which at least one wheel (11) is drivable by means of a hub motor (13), wherein the at least one drivable wheel (11) is steerable by means of a steering device having an electrical steering motor (14) with a stator (14a) and a rotor (14b),
**characterised in that** the rotor (14b) of the steering motor (14) is secured to the chassis (10) and the stator (14a), which is provided with windings, is rotatable in relation to the chassis (10) with the drivable wheel (11).

2. A vehicle according to Claim 1, **characterised in that** the at least one drivable wheel (11) is mounted on the chassis (10) such that it is rotatable about a substantially vertical axis (v-v), and **in that** the steering motor (14) acts on the vertical axis (v-v).

3. A vehicle according to Claim 1 or 2, **characterised in that** the centre axis of the stator (14a) and rotor (14b) of the steering motor (14) coincides with the vertical axis (v-v).

4. A vehicle according to one of the preceding claims, **characterised in that** the stator (14a) of the steering motor (14), which rotates for steering, is received such that it is rotatable in the interior of the rotor (14b) which is fixedly connected to the housing of the chassis (10).

5. A vehicle according to one of the preceding claims, **characterised in that** an energy store (15) for the hub motor (13) and for the steering motor (14) is rotatable in relation to the chassis (10) with the drivable wheel (11).

6. A vehicle according to one of the preceding claims, **characterised in that** the steering motor (14) and the hub motor (13) for the drivable wheel (11) are of substantially like construction, preferably being identical.

7. A vehicle according to one of the preceding claims, **characterised in that** the drivable wheel (11) is the front wheel of a three-wheeled child's pushchair.

8. A vehicle according to one of the preceding claims, **characterised in that** the vehicle has a handle (16) that is displaceable relative to a handle mounting (17) for the purpose of steering the steering device, wherein the relative displacement is detected by inductive means and the signals determined in this way are converted into actuation signals for the steering device.

9. A vehicle according to one of the preceding claims, **characterised in that** the drivable wheel (11), including the hub motor (13) and steering motor (14), is removable from the chassis (10) and is replaceable by a non-driven wheel.

10. A vehicle according to one of the preceding claims, **characterised in that** the vehicle is a child's pushchair or child's buggy.

11. A retrofitting set for converting a hand-guided vehicle such as a child's pushchair having a chassis (10), which for the purpose of retrofitting has a bearing element for securing to the chassis, comprising the following structural parts:
- a drivable wheel (11) having a hub motor (13),
- a steering motor (14) of a steering device for steering the drivable wheel, wherein the steering motor (14) has a stator (14a) and rotor (14b), and wherein the centre axis of the steering motor coincides with the vertical axis (v-v) about which the drivable wheel is steerable,
- the bearing element for mounting the drivable wheel (11) and the steering motor (14),
- wherein the rotor (14b) of the steering motor (14) is secured to the bearing element and the stator (14a), which is provided with windings, is rotatable, with the drivable wheel (11), in relation to the bearing element,
- a control arrangement for controlling the steering device.

## Revendications

1. Chariot ayant un châssis (10), auquel au moins trois roues sont rapportées, dont au moins une roue (11) peut être entraînée au moyen d'un moteur électrique (13) logé dans cette roue, la ou les roue(s) entraînable(s) (11) pouvant être dirigée(s) au moyen d'un dispositif de direction ayant un moteur de direction électrique (14) comportant un stator (14a) et un rotor (14b),
**caractérisé en ce que** le rotor (14b) du moteur de direction (14) est fixé au châssis (10) et le stator (14b) pourvu d'enroulements peut être entraîné en rotation par rapport au châssis (10) avec la roue entraînable (11).

2. Chariot selon la revendication 1, **caractérisé en ce que** la ou les roues entraînables (11) sont montées tournantes sur le châssis (10) autour d'un axe sensiblement vertical (v-v) et le moteur de direction (14) vient en prise avec l'axe vertical (v-v).

3. Chariot selon la revendication 1 ou 2, **caractérisé en ce que** l'axe central du stator (14a) et du rotor (14b) du moteur de direction (14) coïncide avec l'axe vertical (v-v).

4. Chariot selon l'une des revendications précédentes, **caractérisé en ce que** le stator (14a) du moteur de direction (14) tournant pour diriger est reçu tournant à l'intérieur du rotor (14) relié fermement au logement du châssis (10).

5. Chariot selon l'une des revendications précédentes, **caractérisé en ce qu'**un accumulateur d'énergie (15) pour le moteur (13) logé à l'intérieur de la roue et pour le moteur de direction (14) peut tourner avec la roue entraînable (11) par rapport au châssis (10).

6. Chariot selon l'une des revendications précédentes, **caractérisé en ce que** le moteur de direction (14) et le moteur (13) logé dans la roue entraînable (11) ont une conception sensiblement similaire et de préférence identique.

7. Chariot selon l'une des revendications précédentes, **caractérisé en ce que** la roue entraînable (11) est la roue avant d'une poussette à trois roues.

8. Chariot selon l'une des revendications précédentes, **caractérisé en ce que** le chariot comporte une poignée (16) relativement déplaçable par rapport au support de poignée (17) pour diriger au moyen du dispositif de direction, le déplacement relatif étant détecté par induction et les signaux ainsi obtenus étant transformés en signaux de commande pour le dispositif de direction.

9. Chariot selon l'une des revendications précédentes, **caractérisé en ce que** la roue entraînable (11) peut être retirée du châssis (10) avec le moteur (13) logé dans la roue et le moteur de direction (14) et est remplaçable par une roue non entraînable.

10. Chariot selon l'une des revendications précédentes, **caractérisé en ce que** le chariot est une poussette ou une poussette-canne.

11. Kit de montage pour le montage d'un chariot tel qu'une poussette, ayant un châssis (10), lequel comporte en vue du montage un élément de fixation pour la fixation au châssis, constitué des pièces suivantes :
- une roue entraînable (11) ayant un moteur logé à l'intérieur (13) ;
- un moteur de direction (14) d'un dispositif de direction pour diriger la roue entraînable, le moteur de direction (14) comportant un stator (14a) et un rotor (14b) et l'axe central du moteur de direction coïncidant avec l'axe vertical (v-v), la roue entraînable étant dirigeable autour de cette axe,
- l'élément de fixation pour la fixation de la roue entraînable (11) et du moteur de direction (14),
- le rotor (14b) du moteur de direction (14) étant fixé à l'élément de fixation et le stator (14b) pourvu d'enroulements étant tournant avec la roue entraînable (11) par rapport à l'élément de fixation ;
- un système de commande pour la commande du dispositif de direction.
